Europäisches Patentamt

European Patent Office

Office européen des brevets

(19)

(11) Veröffentlichungsnummer : **0 012 343**
**B1**

(12) # EUROPÄISCHE PATENTSCHRIFT

(45) Veröffentlichungstag der Patentschrift :
11.05.83

(21) Anmeldenummer : 79104927.3

(22) Anmeldetag : 05.12.79

(51) Int. Cl.³ : **C 08 L 75/08**, C 08 K   5/00 //
(C08L75/08, 33/00, 9/00,
25/00)

(54) **Verwendung von Stabilisatormischungen für thermoplastische Polyätherpolyurethane zur Verbesserung der Thermostabilität.**

(30) Priorität : 16.12.78 DE 2854408

(43) Veröffentlichungstag der Anmeldung :
25.06.80 Patentblatt 80/13

(45) Bekanntmachung des Hinweises auf die Patenterteilung : 11.05.83 Patentblatt 83/19

(84) Benannte Vertragsstaaten :
DE GB IT NL

(56) Entgegenhaltungen :
DE A 1 570 073
DE A 2 224 641
DE A 2 405 934
DE A 2 638 758
FR A 2 145 214
FR A 2 293 450
US A 3 535 277

(73) Patentinhaber : **BAYER AG**
**Zentralbereich Patente, Marken und Lizenzen**
**D-5090 Leverkusen 1, Bayerwerk (DE)**

(72) Erfinder : **Niederdellmann, Georg, Dr.**
**Heinestrasse 6**
**D-4047 Dormagen 1 (DE)**.
Erfinder : **Goyert, Wilhelm, Dr.**
**Wolfskaul 10**
**D-5000 Köln 80 (DE)**
Erfinder : **Quiring, Bernd, Dr.**
**Albrecht-Haushofer-Strasse 2**
**D-5090 Leverkusen 1 (DE)**

## Verwendung von Stabilisatormischungen für thermoplastische Polyätherpolyurethane zur Verbesserung der Thermostabilität

Die Erfindung betrifft die Verwendung von Stabilisatormischungen aus a) Antioxydantien und b) Co- oder Pfropfpolymerisaten für themoplastisch verarbeitbare Polyätherpolyurethane mit verbesserter Beständigkeit gegen thermischen Abbau.

Thermoplastische Polyurethan-Elastomere auf der Grundlage von Polyisocyanaten, Polyhydroxylverbindungen und Kettenverlängerungsmitteln werden aufgrund ihrer hervorragenden physikalischen Eigenschaften seit Jahren für die unterschiedlichsten Einsatzzwecke verwendet. Eine ausführliche Beschreibung dieser Produktklasse findet sich z. B. im Kunststoff-Handbuch, Band VII, Vieweg-Höchtlen, Carl-Hanser-Verlag.

Die für die Herstellung thermoplastischer Polyurethane in Frage kommenden Polyhydroxylverbindungen sind im wesentlichen lineare Polyole mit Molekulargewichten zwischen 400 und 10 000, bevorzugt zwischen 450 und 6 000, mit vorzugsweise 2, gegebenenfalls — in untergeordneten Mengen — auch 3, zerewitinowaktiven Gruppen (im wesentlichen Hydroxylgruppen).

Derartige Polyole sind Polyester, Polylactone, Polyäther, Polythioäther, Polyesteramide, Polycarbonate, Polyacetale, Vinylpolymere, wie z. B. Polybutadiendiole, bereits Urethan- oder Harnstoffgruppen enthaltende Polyhydroxylverbindungen, gegebenenfalls modifizierte natürliche Polyole, sowie auch andere zerewitinowaktive Gruppen wie Amino-, Carboxyl- oder Thiolgruppen enthaltende Verbindungen.

Diese Verbindungen entsprechen dem Stand der Technik und werden z. B. in den DE-Offenlegungsschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben.

Während Polyätherpolyole für die Herstellung nicht thermoplastisch verarbeitbarer Polyurethan-Gießelastomerer verbreitet Anwendung finden (vgl. Kunststoffe *67*, 1977, Nr. 11, S. 687-690), haben sie für die Herstellung thermoplastisch verarbeitbarer Polyurethane im Vergleich zu Polyesterpolyolen als Polyhydroxylkomponente nur untergeordnete Bedeutung, obwohl sie speziell für die Synthese hydrolysebeständiger und mikrobenresistenter Polyurethanelastomere mit verbesserter Tieftemperaturflexibilität eine geeignete Rohstoffbasis bieten würden.

Diese Diskrepanz beruht auf der Thermolabilität von Polyätherpolyurethanen, die die thermoplastische Verarbeitbarkeit, d. h. die Formgebung aus der Schmelze, stark einschränkt.

Bei den wenigen in der Praxis eingesetzten thermoplastischen Polyurethanen auf Polyätherbasis handelt es sich um weiche, niedrigschmelzende Produkte, die in der Regel Shore A-Härten unter 90 und Shore D-Härten unter 35 aufweisen und deren Verarbeitungstemperaturen 180 °C nicht wesentlich überschreiten.

Steife Polyurethan-Thermoplasten auf Polyäther-Basis mit Härten bis über 60 Shore D und 200 °C überschreitenden Verarbeitungstemperaturen lassen sich nach dem Stand der Technik selbst unter Mitverwendung kommerzieller Antioxidantien, wie sie im folgenden noch näher erläutert werden, mit der erforderlichen Verarbeitungssicherheit nicht produzieren.

Überraschend wurde nun gefunden, daß man bei Temperaturen bis zu 240 °C verarbeitbare, ausreichend thermostabile thermoplastische Polyurethan-Elastomere auf Basis von Polyätherpolyolen erhält, wenn man zur Stabilisierung eine synergistisch wirkende Kombination aus kommerziellen Antioxidantien und einem polaren Copolymerisat oder Pfropfpolymerisat verwendet.

Gegenstand der vorliegenden Erfindung ist somit die Verwendung von Copolymerisaten oder Pfropfpolymerisaten und Antioxidantien in thermoplastischen Polyurethanen zur Stabilisierung gegen thermischen Abbau bei der Verarbeitung, die bestehen aus.

A. Diisocyanaten,

B. Polyätherpolyolen vom Molekulargewicht 450 bis 6 000 gegebenenfalls

C. bis zu 100 Gew.-%, bezogen auf B., an weiteren Polyhydroxylverbindungen vom Molekulargewicht 400 bis 10 000 und

D. Kettenverlängerungsmitteln vom Molekulargewicht 32 bis 400, und dadurch gekennzeichnet sind, daß man als Stabilisator eine Kombination einsetzt aus

a) 0,05 bis 2,0 Gew.-%, vorzugsweise 0,1 bis 1,0 Gew.-%, bezogen auf Polyurethan, eines oder vorzugsweise mehrerer an sich bekannter Antioxidantien und

b) 1 bis 20 Gew.-%, vorzugsweise 5 bis 10 Gew.-%, bezogen auf Polyurethan, eines Copolymerisats oder Pfropfpolymerisats, wobei das Copolymerisat aus

ba) mindestens 5 Gew.-%, bevorzugt mindestens 10 Gew.-%, besonders bevorzugt mindestens 15 Gew.-%, bezogen auf Copolymerisat, eines Monomeren aus der Gruppe Acrylnitril, Acrylsäure- und Methacrylsäurealkylester und

bb) mindestens 20 Gew.-%, bevorzugt mindestens 30 Gew.-%, besonders bevorzugt mindestens 50 Gew.-%, bezogen auf Copolymerisat, mindestens eines Monomeren aus der Gruppe Butadien, Isopren, Styrol und α-Methylstyrol und das Pfropfpolymerisat aus den gleichen Monomeren besteht und aus ba) 35 bis 90 Gew.-% Pfropfmonomeren und bb) 65 bis 10 Gew.-% der Pfropfgrundlage mit einer Einfriertemperatur unter − 30 °C und mit einem Dien-Anteil von 50 bis 100 Gew.-% aufgebaut ist, und Copolymerisat und Pfropfpolymerisat ggfs. weitere Monomere enthalten können.

Die erfindungsgemäß gegen thermischen Abbau stabilisierten thermoplastischen Polyurethane sind entsprechend dem Stand der Technik aufgebaut. Ihr Schmelzbereich liegt vorzugsweise zwischen 180 und 240 °C ; selbstverständlich können jedoch auch niedriger schmelzende thermoplastische Polyurethane in erfindungsgemäßer Weise zusätzlich stabilisiert werden.

Sie bestehen im wesentlichen aus langkettigen Polyolen vom Molekulargewicht 450 bis 6 000, Diisocyanaten und Kettenverlängerungsmitteln vom Molekulargewicht bis zu 400, wobei das Verhältnis von Isocyanat zur Summe aller Zerewitinoff-aktiven Gruppen bei 0,95 bis 1,10 liegt, und das langkettige Polyol zu mindestens 50 Gew.-%, bevorzugt zu 60 bis 100 Gew.-%, ein Polyätherpolyol ist.

Erfindungsgemäß bevorzugte Polyätherpolyole sind Polyäthylenoxid, Polypropylenoxid und Mischpolyäther aus Äthylenoxid und Propylenoxid.

Aus der DE-A 2 638 758 war es bekannt, stabile Dispersionen von 2-60 Gew.-% an Polymerisaten oder Copolymerisaten ungesättigter Monomerer mit einer Teilchengröße von 0,05 bis 5 μm in 40 bis 98 Gew.-% eines mehrwertigen Alkohols mit einem Molekulargewicht zwischen 62 und 400 (d. h. den in der Polyurethanchemie als Kettenverlängerungs- bzw. Vernetzungsmittel an sich bekannten Diolen und Triolen) herzustellen und diese vorzugsweise neben höhermolekularen Polyolen zur Herstellung von gegebenenfalls zellförmigen Polyurethankunststoffen einzusetzen. Bei der Polyurethan-bildenden Reaktion können auch Stabilisatoren gegen Alterungs- und Witterungseinflüsse mitverwendet werden.

In der FR-PS 2 293 450 wird die Verwendung von Polyäther- und Polyesterpolyolen vom Molekulargewicht 500-7 000 beschrieben, welche 1-40 Gew.-% an feinverteilten, zumindest teilvernetzten Polymerisaten zur Herstellung von Polyurethanen (Schaumstoffen) enthalten.

Die erfindungsgemäße Einbringung der Stabilisator-Mischung und deren spezielle Wirkung zur Thermostabilisierung thermoplastischer Polyetherurethane bei hohen Schmelz- bzw. Verarbeitungstemperaturen war dem Stand der Technik nicht zu entnehmen.

Erfindungsgemäß bei der Herstellung des Polyurethans zu verwendende Diisocyanate sind die an sich bekannten aliphatischen, cycloaliphatischen, aromatischen, araliphatischen und heterocyclischen Diisocyanate des Standes der Technik, wie sie z. B. in den bereits genannten DE-Offenlegungsschriften 23 02 564, 24 23 764, 25 49 372, 24 02 840 und 24 57 387 beschrieben sind. Erfindungsgemäß bevorzugte Diisocyanate sind gegebenenfalls mit Methylgruppen substituiertes Hexamethylendiisocyanat, Isophorondiisocyanat und 4,4'-Diisocyanatodiphenylmethan.

Die genannten Diisocyanate können gegebenenfalls zusammen mit bis zu ca. 15 Mol-% (bezogen auf Diisocyanat) eines höherfunktionellen Polyisocyanats eingesetzt werden ; die Menge des höherfunktionellen Polyisocyanats muß jedoch so begrenzt werden, daß ein noch schmelzbares bzw. thermoplastisches Produkt erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen (bzw. auch von Monoisocyanaten) ausgeglichen werden, so daß eine zu weit gehende chemische Vernetzung des Produktes vermieden wird.

Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexylamin sowie Monoalkohole wie Butanol, 1-Äthylhexanol, Octanol, Dodecanol, Amylalkohole, Cyclohexanol und Äthylenglykolmonoäthyläther erwähnt.

Auch die beim Aufbau der erfindungsgemäß stabilisierten Polyurethane einzusetzenden Kettenverlängerungsmittel sind an sich bekannt und z. B. in den DE-Offenlegungsschriften 23 02 564, 24 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Äthanolamin, Diäthanolamin, N-Methyldiäthanolamin, Triäthanolamin und 3-Aminopropanol kommen erfindungsgemäß in Frage. Bevorzugte Kettenverlängerungsmittel sind Äthylenglykol, Di- und Triäthylenglykol, 1,2-Propandiol, 1,3- und 1,4-Butandiol, 1,6-Hexandiol, 2-Äthylhexandiol-(1,3), 2,2-Dimethylpropandiol, 1,4-Bis-hydroxy-methylcyclohexan und Hydrochinondihydroxyäthyläther. Besonders bevorzugt sind Hydrochinondi-β-hydroxyäthyläther, 1,4-Butandiol, 1,6-Hexandiol und Diäthylenglykol.

Als Komponente a) der erfindungsgemäß einzusetzenden Stabilisatorkombinationen kommen im Prinzip alle an sich bekannten Antioxidantien in Betracht.

Beispiele für typische Antioxidantien sind

1) sterisch gehinderte Phenole, z. B. 2,6-Di-tert.-butyl-p-kresol, 4,4'-Bis-(2,6-di-tert.-butyl-phenol), 1,3,5-Trimethyl-2,4,6-tris-(3,5-di-tert.-butyl-4-hydroxy-benzyl)-benzol, 4,4'-Butyliden-bis-(6-tert.-butyl-m-kresol), 3,5-Di-tert.-butyl-4-hydroxybenzylphosphonsäure-diäthylester, 2,2'-Dihydroxy-3,3'-ditert.-butyl-5,5'-dimethyl-diphenylmethan, 2,2'-Dihydroxy-3,3'-dicyclohexyl-5,5'-dimethyl-diphenylmethan, 1,1-Di-(2,2'-Dihydroxy-3,3',5,5'-tetramethylphenyl)-2,2-dimethyl-äthan, (3,5-Di-tert.-butyl-4-hydroxy-phenyl)methyl-stearat, 1,3,5-Tris-(3,5-ditert.-butyl-4-hydroxy-hydrocinnamoyloxyäthyl-hexahydro-s-triazin-2,4,6-trion oder Tetrakis-[methylen-3-(3',5'-di-tert.-butyl-4'-hydroxyphenyl) propionat]-methan,

2) organische Phosphite und Phosphonite, z. B. Di-stearyl-pentaerythrytyl-diphosphit, Di-isodecylpenta-erythrityl-diphosphit, Di-2-äthylhexyl-phosphit, Distearyl-phosphit, Tristearylphosphit, Tris-(nonylphenyl)-phosphit oder Tetrakis-(2,4-di-tert.-butyl-phenyl)-4,4'-biphenylendiphosphonit,

3) Thioäther und Thioester, z. B. Ditridecylthiodipropionat, Dilaurylthiodipropionat, Trilauryltrithiophosphit, oder Octyltriglykolat-trithiophosphit.

Ausführliche Beschreibungen dieser Stabilisatorklassen findet man u. a. in Rubber Chem. Technol.

3

**0 012 343**

47 (1974), Nr. 4, S. 949-959 ; Angew. Makromol. Chem. 56 (1976), Nr. 828, S. 121-138 ; Kunststoffe 67 (1977), Nr. 3, S. 151-153 ; der DE-AS 15 95 699, den DE-Offenlegungsschriften 2 302 654, 2 412 591, 2 454 891 und 27 02 661 sowie den entsprechenden Merkblättern der Herstellungsfirmen Bayer AG, Ciba-Geigy, Sandoz, Ferro Corporation, Borg-Warner Chemicals, Monsanto u. a.

Geeignete Antioxidantien sind ferner

4) Triazine, z. B. 2,4-Bis(n-octylthio)-6-(4-hydroxy-3,5-di-tert.-butylanilino)-1,3,5-triazin entsprechend den US-Patenten 3 255 191 und 3 334 046,

5) 2-Mercaptobenzimidazol oder 2-(2'-Hydroxyphenyl)-benztriazole entsprechend der DE-OS 20 65 975,

6) Piperidinylguanidinverbindungen gemäß DE-OS 25 45 647,

7) Cyanamide entsprechend der DE-OS 25 45 646 und

8) Thiazolinylamino-piperidin-Derivate gemäß DE-OS 25 45 645.

Bevorzugt sind Stabilisatoren der Gruppen (1) bis (3) ; besonders bevorzugt sind Kombinationen von Vertretern der Gruppen (1) und (2) oder (1) und (3) im Mischungsverhältnis 10 : 90 bis 90 : 10, bevorzugt 30 : 70 bis 70 : 30.

Komponente b) der erfindungsgemäß einzusetzenden Stabilisatorkombinationen sind Copolymerisate aus polaren und wenig polaren bzw. unpolaren olefinisch ungesättigten Monomeren. Mindestens 5 Gew.-%, vorzugsweise mindestens 10 Gew.-%, besonders bevorzugt mindestens 15 Gew.-%, der Monomeren sind dabei aus der Gruppe Acrylnitril, Acrylsäurealkylester und Methacrylsäurealkylester auszuwählen und mindestens 20 Gew.-%, bevorzugt mindestens 30 Gew.-%, besonders bevorzugt mindestens 50 Gew.-%, aus der Gruppe Butadien, Isopren, Styrol und α-Methyl-styrol. Als (Meth)acrylsäurealkylester sind solche mit 4 bis 10 C-Atomen, insbesondere 4 bis 6 C-Atomen, in der Alkoholkomponente bevorzugt ; besonders bevorzugtes polares Monomeres ist jedoch Acrylnitril. Unter den wenig bzw. nicht polaren Monomeren sind Butadien und Styrol bevorzugt ; besonders bevorzugt werden zum Aufbau des Copolymeren sowohl Butadien als auch Styrol eingesetzt.

Weitere gegebenenfalls mitzuverwendende Monomere sind z. B. Chloropren, Vinylchlorid, Maleinsäureanhydrid, Äthylen, Propylen, Buten-1 und Methylpenten.

Polymerisate dieser Art werden z. B. von Vieweg et al im « Kunststoff-Handbuch », Bd. II, IV-VII, IX und XI, Carl-Hanser-Verlag, München, 1963-1971 und von Hansjürgen Saechtling im « Kunststofftaschenbuch », 20. Ausgabe, Carl-Hanser-Verlag, München-Wien, 1977, beschrieben. Nicht geeignet sind im wesentlichen unpolare Polymerisate wie z. B. natürlicher Kautschuk, EPM, EPDM und reiner Butadienlatex, da deren Verträglichkeit mit TPU vermutlich zu gering ist.

Erfindungsgemäß kommen sowohl unvernetzte als auch vernetzte kautschukartige Copolymerisate als auch Pfropfcopolymerisate in Betracht, sofern sie die oben erwähnten Kriterien hinsichtlich ihrer Zusammensetzung erfüllen. Diese Polymerisate können nach den an sich bekannten Verfahren der Emulsions-, Suspension-, Masse- und Lösungspolymerisation bzw. Kombination dieser Verfahren hergestellt werden. Erfindungsgemäß besonders bevorzugt sind als Komponente b) Pfropfkautschuke, während vernetzte Kautschuke am wenigsten bevorzugt sind.

Erfindungsgemäß geeignete Pfropfprodukte werden in an sich bekannter Weise erhalten, indem man die zu pfropfenden Monomeren in Gegenwart einer in einem separaten Polymerisationsschritt hergestellten Elastomerkomponente polymerisiert. Die Herstellung der Pfropfprodukte kann nach den bekannten Polymerisations verfahren des Standes der Technik erfolgen. Hierzu gehören die Emulsions-, die Suspensions- und die Masse-Polymerisation sowie Kombinationen aus diesen Verfahren. Bevorzugt werden die Pfropfprodukte durch Emulsionspolymerisation hergestellt.

Die als Pfropfgrundlage dienende Elastomerkomponente ist vorzugsweise ein kautschukartiges Polymerisat mit einer Einfriertemperatur $T_G$ von < − 30 °C (DIN 53 445), insbesondere < − 50 °C. Bevorzugt sind 1,3-Dien-und Acrylatkautschuke ; besonders bevorzugt sind Butadien-und/oder Isopren-Polymerisate mit bis zu 30 Gew.-% Styrol und/oder Acrylnitril sowie Copolymerisate aus Butadien und Acrylsäurealkylestern. Der Dienanteil in der Pfropfgrundlage beträgt vorzugsweise 50 bis 100 Gew.-%, besonders bevorzugt 75 bis 100 Gew.-%.

Werden die Pfropfprodukte durch Emulsionspolymerisation hergestellt, so sollte die Teilchengröße der Pfropfgrundlage (gemeint ist der Teilchendurchmesser $d_{50}$, d. h. der mittlere Durchmesser, unterhalb und oberhalb dessen jeweils 50 % der Teilchen liegen) bevorzugt im Bereich von 0,05 bis 0,8 μm liegen. Die Pfropfgrundlage kann vernetzt oder unvernetzt sein ; bevorzugt sind Produkte mit einem Gelgehalt > 30 % (gemessen in Toluol).

Als zu pfropfende Monomere kommen insbesondere Styrol, α-Methylstyrol und Acrylnitril in Betracht. Wenn besondere Effekte erzielt werden sollen, dann kann man jedoch auch Methacrylnitril, Alkylester der Acrylsäure, Alkylester der Methacrylsäure oder Halogenderivate des Styrols und des α-Methylstyrols einsetzen. Bevorzugt werden Gemische von Styrol und Acrylnitril im Gewichtsverhältnis 9 : 1 bis 1 : 1 als Pfropfmonomere angewandt.

Das Gewichtsverhältnis von Pfropfgrundlage zu Pfropfmonomeren liegt in der Regel zwischen 10 : 90 und 65 : 35, bevorzugt sind Gewichtsverhältnisse zwischen 20 : 80 und 55 : 45, besonders bevorzugt 30 : 70 und 50 : 50. Es ist auch möglich, Mischungen mehrerer Pfropfprodukte einzusetzen, wobei jedes Pfropfprodukt für sich den genannten Bedingungen genügt.

Die erfindungsgemäß stabilisierten Chemiewerkstoffe können im Prinzip so hergestellt werden, daß

4

man das fertige thermoplastische Polyurethan mit den beiden Stabilisatorkomponenten a) und b) « trocken » vermischt (« dry blending »), z. B. mit Hilfe von Innenmischern oder Extrudern. Vorzugsweise stellt man jedoch das Polyurethan bereits in Gegenwart der Stabilisatorkomponenten (zweckmäßigerweise in einer Reaktionsschnecke) her.

Das erfindungsgemäß bevorzugte Verfahren besteht darin, das Copolymerisat in Pulver- oder Granulatform in den Trichter einer selbstreinigenden Mehrwellenschneckenmaschine einzuspeisen und die Antioxidantien sowie die polyurethan-bildenden Komponenten über dieselbe oder auch eine oder mehrere andere Einspeisstellen, gegebenenfalls portionsweise, in den Extruder einzubringen. Nachdem die Umsetzung der polyurethanbildenden Komponenten im wesentlichen abgeschlossen ist, wird das fertige erfindungsgemäße stabilisierte thermoplastische Polyurethan aus dem Extruder ausgetragen, gegebenenfalls granuliert und in an sich bekannter Weise formgebend weiterverarbeitet.

Geeignete Schneckenmaschinen sind an sich bekannt und werden z. B. in den DE-Patentschriften 813 154, 862 668 und 940 109, in US-PS 3 233 025, US-PS 3 642 964, DE-OS 24 47 368, DE-OS 26 10 980 sowie insbesondere DE-AS 2 302 564 und DE-OS 25 49 372 (US-PS 3 963 679) beschrieben.

Die erfindungsgemäßen Polyurethane werden insbesondere für kälteschlagfeste, steife, stoßelastische Formteile, z. B. Skischuhschalen, oder mikrobenresistente Artikel, z. B. Ohrmarken für Weidevieh, eingesetzt.

In den Beispielen wurde für die Polyurethanreaktion eine handelsübliche Zweiwellenschneckenknetpresse des Typs ZSK 53 V der Firma Werner & Pfleiderer, Stuttgart, mit selbstreinigendem Wellenbesatz verwendet. Die Länge des Verfahrensanteils entspricht etwa dem 42-fachen Wellendurchmesser. Für alle Beispiele wird der gleiche Wellenbesatz mit einem Knetelementanteil von ca. 20 % verwendet. Der Verfahrensteil besteht aus 12 Gehäusen, wobei das erste mit einem Einspeisetrichter für den verwendeten Pfropf-Kautschuk versehen ist. Funktion und Wirkungsweise der Schneckenmaschine, von Knet- und Förderelementen des Wellenbesatzes usw. sind in den Firmenschriften von Werner & Pfleiderer bzw. in der DE-OS 2 302 564 (US-PS 3 963 679) ausführlich beschrieben.

Die Verweilzeiten der Reaktionsschmelze in der Schneckenmaschine betragen in der Regel 0,3 bis 30 Minuten, bevorzugt 0,5 bis 4 Minuten. Die Temperatur des Schneckengehäuses liegt zwischen etwa 60 und 300 °C (ca. 80 bis 280 °C, jedoch oberhalb des Erweichungspunktes des Copolymerisats, in der Eingangszone ; ca. 100 bis 300 °C in der Mitte des Extruders und ca. 60 bis 250 °C in der Austragszone). Die aus dem Extruder austretende Schmelze wird nach an sich bekannten Verfahren abgeschreckt und zerkleinert. Die Verfahrensprodukte können auf die übliche Weise thermoplastisch verarbeitet werden.

Wenn nicht anders vermerkt, sind in den Beispielen Mengenangaben als Gewichtsteile bzw. Gewichtsprozente zu verstehen.

## Herstellung von Pfropfkautschuk A

a) Pfropfgrundlage

In einem druckfesten Rührgefäß wird eine Mischung aus 68 Teilen entsalztem Wasser, 0,5 Teilen des Natriumsalzes der disproportionierten Abietinsäure, 100 Teilen Butadien, 0,4 Teilen n-Dodecylmercaptan und 0,5 Teilen Kaliumperoxidisulfat vorgelegt. Die Reaktion wird zwischen 55 und 75 °C geführt (Start — Endtemperatur). Im Laufe der Reaktion werden 1,5 Teile des Natriumsalzes der disproportionierten Abietinsäure nachdosiert. Die Polymerisation wird bis zu einem Umsatz von ca. 98 % geführt.

Charakterisierung des entstandenen Polybutadienlatex :

| | |
|---|---|
| Konzentration | 58,5 % |
| Gelgehalt in Toluol | 80 % |
| Teilchengröße | $d_{50} = 0,4\ \mu m$ |
| Einfriertemperatur | − 80 °C (DIN 53 445) |

b) Herstellung des Pfropfpolymerisates :

85 Teile des Pfropfgrundlagenlatex werden in einem Rührgefäß vorgelegt und mit 140 Teilen entsalztem Wasser verdünnt, in dem zuvor 0,5 Teile Kaliumperoxidisulfat gelöst wurden. Nach Verdrängung der Luft aus der Lösung durch Durchleiten von Stickstoff und Erwärmen auf 65 °C werden in 2 getrennten Zuläufen a) 2 Teile des Natriumsalzes der disproportionierten Abietinsäure (gelöst in 25 Teilen Wasser) und b) eine Mischung aus 15 Teilen Acrylnitril und 35 Teilen Styrol gleichmäßig über einen Zeitraum von 4 Stunden zudosiert. Zur Vervollständigung der Reaktion wird nach beendetem Zulauf noch 2 Stunden bei 65 °C weitergerührt.

Der so erhaltene Pfropfpolymerisatlatex wird mit 2 %iger Magnesiumsulfatlösung koaguliert, das Koagulat abgetrennt, salzfrei gewaschen und bei 70 °C im Vakuum getrocknet.

Charakterisierung des Pfropfpolymerisates :

| | |
|---|---|
| Elastomergehalt | 50 % |
| Styrolgehalt | 35 % |
| Acrylnitrilgehalt | 15 % |

**0 012 343**

Prüfung der Thermostabilität der Elastomerschmelze

Die Thermostabilität der Elastomerchmelze wurde mit Hilfe des sogenannten « Zyklustests » beurteilt, der zuverlässige Aussagen über die Verarbeitungssicherheit des Elastomeren unter Praxisbedingungen erlaubt. Hierbei wurden auf einer Spritzgußmaschine vom Typ A 14 der Firma Anker von jeder Probe sieben Prüfplatten (130 × 50 × 2 mm) im Intervall von jeweils drei Minuten abgespritzt, wobei der Spritzzylinder stets zu etwa 2/3 entleert und nach dem Spritzvorgang durch frisches Material aufgefüllt wurde. Während des 3 Minuten-Intervalls zwischen jedem Spritzzyklus war das im Spritzzylinder befindliche Produkt (zu etwa 1/3 altes und zu etwa 2/3 frisches Material) voll der thermischen Belastung bei der jeweiligen Verarbeitungstemperatur ausgesetzt. Beurteilt wurde, ab der wievielten Platte thermische Zersetzungserscheinungen (weißliche Schlieren im Prüfkörper) auftraten.

## Beispiel 1 (Vergleich)

Durch Umsetzung von

188,4 Teilen eines Präpolymeren aus :30 Teilen Polypropylenglykol (mittleres Molekulargewicht 2 000, mittlere Funktionalität 2,0) und 88,4 Teilen 4,4'-Diphenylmethandiisocyanat,

    0,2 Teilen 2,6-Di-tert.-butyl-p-kresol,
    0,3 Teilen Stearylamid und
    27   Teilen Butandiol-1,4

bei Temperaturen zwischen 140 und 200 °C in der Zweiwellenreaktionsschnecke wird ein opaktransparentes Granulat erhalten.

Wie oben beschrieben, werden im 3 Minuten-Zyklus mehrere Prüfplatten unter folgenden Abspritzbedingungen hergestellt :

Zylindertemperatur :

|  |  |
|---|---|
| I | 200 °C |
| II | 210 °C |
| III | 210 °C |

| | |
|---|---|
| Düse : | 220 °C |
| Spritz/Staudruck : | 60,78 · $10^5$/15,19 · $10^5$ N/m² (60/15 atm.) |
| Zyklus : | 25/25 sec., danach 3 Minuten Pause |
| Schneckendrehzahl : | 140 min$^{-1}$ |

Man erhält schlierige, zunehmend opake Spritzplatten mit zunehmender Intransparens und Tendenz zur Oberflächendelaminierung und gleichzeitig abnehmender mechanischer Festigkeit.

Das Material ist für die Spritzgußverarbeitung völlig unbrauchbar.

## Beispiel 2 (Vergleich)

Es wird wie in Beispiel 1 verfahren (aber ohne Anwendung des Antioxidans), jedoch werden dem Elastomeren während der Reaktion zusätzlich 10,8 Teile des Pfropfkautschuks A zugesetzt. Man erhält ein transparentes, leicht opakes Granulat.

Das Material weist gegenüber Beispiel 1 verbesserte mechanische Eigenschaften auf ; die im Zyklustest abgespritzten Prüfplatten sind alle opak-transparent, weisen jedoch ab der dritten Platte in zunehmendem Maß Schlieren auf der Oberfläche auf.

Die Spritzgußverarbeitung dieses Materials ist demzufolge nicht befriedigend.

## Beispiel 3 (Vergleich)

Es wird wie in Beispiel 1 verfahren, jedoch werden zur Stabilisierung außer 0,2 Teilen 2,6-Di-tert.-butyl-p-kresol zusätzlich 0,5 Teile Tris-(nonylphenyl)-phosphit mitverwendet.

Man erhält ein fast klares, transparentes Granulat ; das Material weist gute Elastomereigenschaften auf.

Der Zyklustest liefert fünf einwandfreie Platten, die sechste und siebte Prüfplatte weisen jedoch bereits wachsartige Schlieren auf. Das Material ist für den Spritzguß nur bedingt brauchbar.

## Beispiel 4 (erfindungsgemäß)

Es wird wie in Beispiel 3 verfahren, jedoch werden dem Elastomeren neben den beiden Antioxidantien während der Reaktion noch 10,8 Teile des Pfropfkautschuks A zugesetzt. Man erhält ein schwach

6

gelbliches, transparentes Granulat. Die Elastomereigenschaften des Materials entsprechen bei verbesserter Thermostabilität denjenigen des Beispiels 3. Alle sieben Prüfplatten des Zyklustestes sind einwandfrei und weisen keine Anzeichen thermischer Schädigung auf. Das Material läßt sich mit ausreichender Sicherheit im Spritzguß und durch Extrusion verarbeiten.

## Beispiel 5 (Vergleich)

Unter den in Beispiel 1 beschriebenen Bedingungen werden

163,0 Teile eines Präpolymeren aus 75,0 Teilen Polypropylenglykol (mittleres Molekulargewicht 2 000, mittlere Funktionalität 2,0) und 88,0 Teilen 4,4'-Diphenylmethandiisocyanat,
25,0 Teile Polybutandioladipat (OH-Zahl 49,5 ; Säurezahl 0,4),
27,0 Teile Butandiol-1,4,
0,3 Teile Stearylamid,
0,4 Teile 2,6-Di-tert.-butyl-p-kresol und
0,5 Teile Dilaurylthiodipropionat

zu einem Elastomeren umgesetzt.

Das Material läßt sich unter den in Beispiel 1 beschriebenen Verarbeitungsbedingungen zu klaren, transparenten Platten verspritzen.

Der Zyklustest liefert drei einwandfreie Platten ; ab der vierten Platte treten in zunehmendem Maße weiße, inhomogene Ausflockungen auf.

## Beispiel 6 (erfindungsgemäß)

Es wird wie in Beispiel 5 verfahren, jedoch werden während der Reaktion 10,8 Teile des Pfropfkautschuks A mit eingearbeitet.

Das Material läßt sich zu leicht gelblichen, klaren, transparenten Platten verspritzen.

Alle sieben Platten des Zyklustestes sind einwandfrei und zeigen keinerlei Zersetzung.

## Beispiel 7 (Vergleich)

Unter den in Beispiel 1 beschriebenen Bedingungen werden

224,0 Teile eines Präpolymeren aus 100,0 Teilen Polypropylenglykol (mittleres Molekulargewicht 2 000, mittlere Funktionalität 2,0) und 124,0 Teile 4,4'-Diphenylmethandiisocyanat,
40,0 Teile Butandiol-1,4,
0,3 Teile Stearylamid,
0,4 Teile 2,2'-Dihydroxy-3,3'-dicyclohexyl-5,5'-dimethyl-diphenylmethan und
0,5 Teile Dilaurylthiodipropionat

zu einem Elastomeren umgesetzt.

Bei Spritztemperaturen von 210 °C (Zylinder I), 220 °C (Zylinder II und III) und 230 °C (Düse) erhält man zunächst klare, transparente Spritzplatten ; beim Zyklustest treten jedoch ab der vierten Platte weiße, schlierenförmige Inhomogenitäten auf.

## Beispiel 8 (erfindungsgemäß)

Es wird ein Elastomer der gleichen Rezeptur wie in Beispiel 7 hergestellt, jedoch werden während der Reaktion 26,4 Teile des Pfropfkautschuks A mitverwendet.

Das Material läßt sich unter den Verarbeitungsbedingungen des Beispiels 7 ohne Zersetzungserscheinungen abspritzen. Alle sieben Platten des Zyklustests sind einwandfrei.

## Beispiel 9 (Vergleich)

Unter den im Beispiel 1 beschriebenen Bedingungen werden

198,8 Teile eines Präpolymeren aus 80 Gew.-Teilen Polypropylenglykol (mittleres Molekulargewicht 2 000, mittlere Funktionalität 2,0) und 118,8 Teile 4,4'-Diphenylmethandiisocyanat,
20 Teile Polybutandioladipat (OH-Zahl : 49,5 ; Säurezahl : 0,4),
45 Teile Diäthylenglykol,
0,3 Teile Stearylamid,
0,4 Teile 2,2'-Dihydroxy-3,3'-dicyclohexyl-5,5'-dimethyl-diphenylmethan und
0,5 Teile Dilaurylthiodipropionat
zu einem Elastomeren umgesetzt.

**0 012 343**

Unter den in Beispiel 1 angegebenen Spritzbedingungen erhält man klare, transparente Spritzplatten, die im Zyklustest ab der dritten Platte weiße Inhomogenitätsschlieren aufweisen.

Beispiel 10 (erfindungsgemäß)

Es wird ein Elastomer gleicher Rezeptur wie in Beispiel 9 hergestellt unter zusätzlicher Mitverwendung von 26,5 Teilen des Pfropfkautschuks A.

Man erhält ein unter den in Beispiel 1 angegebenen Spritzbedingungen einwandfrei zu homogenen, leicht opaken Spritzgußplatten verarbeitbares Material.

Im Zyklustest sind alle sieben Platten einwandfrei und ohne Anzeichen thermischer Zersetzung.

In der nachstehenden Tabelle sind die Eigenschaften der gemäß Beispiel 1 bis 10 erhaltenen Polyurethane zusammengestellt.

(Siehe die Tabelle, Seite 9)

Tabelle

| Beispiel | 1 | 2 | 3 | 4 | 5 | 6 | 7 | 8 | 9 | 10 |
|---|---|---|---|---|---|---|---|---|---|---|
| Modul 100 % | 15,4 | 14,5 | 17,6 | 19,0 | 15,0 | 16,7 | 27,3 | 25,0 | 24,7 | 23,4 |
| 300 % | – | 18,7 | 30,7 | 29,3 | – | 26,1 | – | – | 35,2 | 31,5 |
| Zugfestigkeit (MPa) | 22,4 | 21,7 | 32,7 | 29,3 | 27,0 | 29,0 | 32,1 | 31,4 | 35,8 | 33,5 |
| Bruchdehnung (%) | 212 | 482 | 327 | 298 | 266 | 311 | 219 | 260 | 320 | 329 |
| Grenzbiegespannung (MPa) | 2,8 | 7,1 | 5,9 | 6,6 | 8,3 | 9,1 | 17,4 | 18,8 | 14,2 | 15,0 |
| Kerbschlagzähigkeit bei −20°C (kJ/m$^2$) | 40 | 40 | 40 | 40 | 40 | 40 | 26,9 | 27,9 | 19,9 | 18,2 |
| Shore-Härte A/D | 89/39 | 97/47 | 95/46 | 95/48 | 95/45 | 97/52 | 97/60 | 98/61 | 98/61 | 98/62 |
| Sofortreißtest (N) | 150 | 58 | 133 | 125 | 172 | 237 | 218 | 185 | 280 | 232 |
| Elastizität (%) | 36 | 36 | 36 | 36 | 37 | 37 | 41 | 40 | 40 | 39 |
| Abrieb (mm$^3$) | 84 | 129 | 48 | 31 | 54 | 52 | 48 | 39 | 42 | 50 |
| Schrumpf (%) normal/getempert | 2,0/5,6 | 0,8/1,2 | 0,7/2,1 | 0,9/3,0 | 0,6/1,3 | 0,8/3,0 | 0,6/1,9 | 0,5/2,1 | 0,6/2,7 | 0,4/2,8 |
| Zyklustest (Anzahl der optisch einwandfreien Platten) | 0 | 2 | 5 | 7 | 3 | 7 | 3 | 7 | 2 | 7 |

0012343

**Ansprüche**

1. Verwendung von Copolymerisaten oder Pfropfpolymerisaten und Antioxydantien in thermoplastischen Polyurethanen zur Stabilisierung gegen thermischen Abbau bei der Verarbeitung von thermoplastischen Polyätherpolyurethanen aus

A. Diisocyanaten,

B. Polyätherpolyolen vom Molekulargewicht 450 bis 6 000, gegebenenfalls

C. bis zu 100 Gew.-%, bezogen auf B), an weiteren Polyhydroxylverbindungen vom Molekulargewicht 400 bis 10 000 und

D. Kettenverlängerungsmitteln vom Molekulargewicht 32 bis 400,

dadurch gekennzeichnet, daß man als Stabilisator eine Kombination einsetzt aus

a) 0,05 bis 2,0 Gew.-%, bezogen auf Polyurethan, eines oder mehrer an sich bekannter Antioxydantien und

b) 1 bis 20 Gew.-%, bezogen auf Polyurethan, eines Copolymerisats oder Pfropfpolymerisats, wobei das Copolymerisat aus

ba) mindestens 5 Gew.-%, bezogen auf Copolymerisat, eines Monomeren aus der Gruppe Acrylnitril, Acrylsäure- und Methacrylsäurealkylester und

bb) mindestens 20 Gew.-%, bezogen auf Copolymerisat, mindestens eines Monomeren aus der Gruppe Butadien, Isopren, Styrol und α-Methylstyrol und das Pfropfpolymerisat aus den gleichen Monomeren besteht und aus Pfropfmonomeren und ba) 35 bis 90 Gew.-% bb) 65 bis 10 Gew.-% der Pfropfgrundlage mit einer Einfriertemperatur unter − 30 °C und mit einem Dien-Anteil von 50 bis 100 Gew.-%

aufgebaut ist, und Copolymerisat und Pfropfpolymerisat ggfs. weitere Monomere enthalten können.

2. Verwendung nach Anspruch 1, dadurch gekennzeichnet, daß Komponente a) des Stabilisators aus der Gruppe : sterisch gehinderten Phenole, organische Phosphite und Phosphonite, Thioäther und Thioester ausgewählt ist.

3. Verwendung nach Anspruch 1 und 2, dadurch gekennzeichnet, daß Komponente a) des Stabilisators ein Gemisch

aa) einem sterisch gehinderten Phenol und

ab) einem organischen Phosphit, Phosphonit, Thioäther oder Thioester

im Gewichtsverhältnis aa) : ab) von 10 : 90 bis 90 : 10 ist.

4. Verwendung entsprechend Ansprüchen 1 bis 3, dadurch gekennzeichnet, daß Komponente b) des Stabilisators eine Pfropfprodukt von 45 bis 80 Gew.-% Styrol und Acrylnitril auf 55 bis 20 Gew.-% einer als Pfropfgrundlage dienenden Elastomerkomponente auf Basis 1,3-Dien- und Acrylatkautschuken mit einer Einfriertemperatur von < 30 °C ist.

5. Verwendung nach Ansprüchen 1 bis 4, dadurch gekennzeichnet, daß in der Komponente b) als Pfropfgrundlage Butadien- und/oder Isopren-Polymerisate mit bis zu 30 Gew.-% Styrol und/oder Acrylnitril sowie Copolymerisate aus Butadien und Acrylsäurealkylestern verwendet werden.

6. Verwendung nach Ansprüchen 1 bis 5, dadurch gekennzeichnet, daß in der Komponente b) eine Pfroptgrundlage mit einem Dienanteil von 75 bis 100 Gew.-% und als Pfropfmonomere Gemische von Styrol und Acrylnitril im Gewichtsverhältnis von 9 : 1 bis 1 : 1 angewandt werden, wobei die Gewichtsverhältnisse von Pfropfgrundlage zu Pfropfmonomeren zwischen 30 : 70 und 50 : 50 liegen.

7. Verwendung nach Ansprüchen 1 bis 6, dadurch gekennzeichnet, daß man Ätherpolyurethane mit einem Schmelzbereich zwischen 180 und 240 °C einsetzt.

8. Verwendung nach Ansprüchen 1 bis 7, dadurch gekennzeichnet, daß man als polyurethanbildende Komponente B) Polyätherpolyole aus Propylenoxid oder Mischpolyäther aus Äthylenoxid und Propylenoxid mit einem Molekulargewicht von 450 bis 6 000 einsetzt.

9. Verwendung nach Ansprüchen 1 bis 8, dadurch gekennzeichnet, daß man die Stabilisatorkomponente b) in Pulver- oder Granulatform wie auch die Antioxidantien a) und die polyurethanbildenden Komponenten über dieselbe oder auch eine oder mehrere andere Einspeisstellen, gegebenenfalls portionsweise, in eine Mehrwellenschneckenmaschine einspeist und nach Umsetzung der polyurethanbildenden Komponenten das stabilisierte thermoplastische Polyurethan aus dem Extruder austrägt und gegebenenfalls granuliert.

10. Verwendung nach Ansprüchen 1 bis 9, dadurch gekennzeichnet, daß man das fertige thermoplastische Polyurethan mit den Stabilisatorkomponenten a) und b) mit Hilfe von Innenmischern oder Extrudern vermischt.

**Claims**

1. The use of copolymers or graft polymers and anti-oxidants in thermoplastic polyurethanes for stabilising them against thermal degradation in the processing of thermoplastic polyether polyurethanes of

A. diisocyanates,

B. polyether polyols having a molecular weight of 450 to 6,000, optionally

C. up to 100 % by weight, based on B), of other polyhydroxyl compounds having a molecular weight of 400 to 10,000 and

D. chain-extending agents having a molecular weight of 32 to 400,

characterised in that the stabiliser used is a combination of

a) 0.05 to 2.0 % by weight, based on polyurethane, of one or more anti-oxidants known per se and

b) 1 to 20 % by weight, based on polyurethane, of a copolymer or graft polymer,

the copolymer consisting of

ba) at least 5 % by weight, based on the copolymer, of a monomer from the group comprising acrylonitrile, acrylic acid alkyl ester and methacrylic acid alkyl ester and

bb) at least 20 % by weight, based on the copolymer, of at least one monomer from the group comprising butadiene, isoprene, styrene and α-methyl styrene and the graft polymer consisting of the same monomers and being made up of ba) 35 to 90 % by weight of graft monomers and bb) 65 to 10 % by weight of the graft base having a second order transition temperature below − 30 °C and a diene content of 50 to 100 % by weight, and it being possible for the copolymer and the graft polymer to optionally contain other monomers.

2. Use according to Claim 1, characterised in that component a) of the stabiliser is selected from the group comprising sterically hindered phenols, organic phosphites and phosphonites, thioethers and thioesters.

3. Use according to Claim 1 and 2, characterised in that component a) of the stabiliser is a mixture of

aa) a sterically hindered phenol and

ab) an organic phosphite, phosphonite, thioether or thioester,

the ratio by weight of aa) : ab) being 10 : 90 to 90 : 10.

4. Use according to Claims 1 to 3, characterised in that component b) of the stabiliser is a graft product of 45 to 80 % by weight of styrene and acrylonitrile on 55 to 20 % by weight of an elastomer component used as the graft base and based on 1,3-diene and acrylate rubbers having a second order transition temperature of < 30 °C.

5. Use according to Claims 1 to 4, characterised in that in component b) butadiene and/or isoprene polymers containing up to 30 % by weight of styrene and/or acrylonitrile and also copolymers of butadiene and acrylic acid alkyl esters are used as the graft base.

6. Use according to Claims 1 to 5, characterised in that in component b) a graft base with a diene content of 75 to 100 % by weight is used and mixtures of styrene and acrylonitrile in a ratio by weight of 9 : 1 to 1 : 1 are used as the graft monomers, the ratios by weight of graft base to graft monomers being between 30 : 70 and 50 : 50.

7. Use according to Claims 1 to 6, characterised in that ether polyurethanes having a melting range of between 180 and 240 °C are used.

8. Use according to Claims 1 to 7, characterised in that polyether polyols of propylene oxide or mixed polyethers of ethylene oxide and propylene oxide having a molecular weight of 450 to 6,000 are used as the polyurethane-forming component B).

9. Use according to Claims 1 to 8, characterised in that the stabiliser component b) in powder or granular form and the anti-oxidants a) and the polyurethane-forming components are introduced into a multiple-screw extruder, optionally in portions, through the same inlet or even through one or more other inlets and after the reaction of the polyurethane-forming components the stabilised thermoplastic polyurethane is discharged from the extruder and is optionally granulated.

10. Use according to Claims 1 to 9, characterised in that the finished thermoplastic polyurethane is mixed with the stabiliser components a) and b) with the aid of internal mixers or extruders.

## Revendications

1. Utilisation de copolymères ou de polymères greffés et d'anti-oxydants dans des polyuréthannes thermoplastiques pour la stabilisation contre la dégradation thermique au travail des polyéther-polyuréthannes thermoplastiques de

A. des diisocyanates,

B. des polyéther-polyols de poids moléculaire 450 à 6 000, éventuellement,

C. jusqu'à 100 % en poids, par rapport à B), d'autres composés polyhydroxylés de poids moléculaire 400 à 10 000 et

D. des agents d'allongement des chaînes de poids moléculaire 32 à 400,

caractérisée en ce que l'on utilise en tant que stabilisant une combinaison de

a) 0,05 à 2,0 % en poids, par rapport au polyuréthanne, d'un ou plusieurs anti-oxydants connus en soi et

b) 1 à 20 % en poids, par rapport au polyuréthanne, d'un copolymère ou polymère greffé, le copolymère étant constitué de

ba) au moins 5 % en poids, par rapport au copolymère, d'un monomère du groupe de l'acrylonitrile, des esters alkyliques de l'acide acrylique et de l'acide méthacrylique et

bb) au moins 20 % en poids, par rapport au copolymère, d'au moins un monomère du groupe du butadiène, de l'isoprène, du styrène et de l'alpha-méthylstyrène, et le polymère greffé consiste en les mêmes monomères et est constitué de ba) 35 à 90 % en poids de monomères de greffage et bb) 65 à 10 % en poids du support de greffage, avec une température de transition du second ordre inférieure à − 30 °C et une fraction de diène de 50 à 100 % en poids, et le copolymère et le polymère greffé peuvent contenir éventuellement d'autres monomères.

2. Utilisation selon la revendication 1, caractérisée en ce que le composant a) du stabilisant est choisi dans le groupe : phénols faisant l'objet d'un empêchement stérique, phosphites et phosphonites organiques, thioéthers et thioesters.

3. Utilisation selon les revendications 1 et 2, caractérisée en ce que le composant a) du stabilisant est un mélange de

aa) un phénol faisant l'objet d'un empêchement stérique et

ab) un phosphite organique, un phosphonite, un thioéther ou thioester

dans des proportions en poids aa) : ab) de 10 : 90 à 90 : 10.

4. Utilisation selon les revendications 1 à 3, caractérisée en ce que le composant b) du stabilisant est un produit de greffage de 45 à 80 % en poids de styrène et d'acrylonitrile sur 55 à 20 % en poids d'un composant élastomère servant de support de greffage à base de caoutchoucs de 1,3-diène et d'acrylate présentant une température de transition du second ordre inférieure à 30 °C.

5. Utilisation selon les revendications 1 à 4, caractérisée en ce que, dans le composant b), on utilise comme support de greffage des polymères du butadiène et/ou de l'isoprène contenant jusqu'à 30 % en poids de styrène et/ou d'acrylonitrile ainsi que des copolymères du butadiène et d'esters alkyliques de l'acide acrylique.

6. Utilisation selon les revendications 1 à 5, caractérisée en ce que, dans le composant b), on utilise un support de greffage à une fraction diénique de 75 à 100 % en poids et, en tant que monomères greffés, des mélanges de styrène et d'acrylonitrile dans des proportions relatives en poids de 9 : 1 à 1 : 1, les proportions relatives entre le support de greffage et les monomères greffés allant de 30 : 70 à 50 : 50.

7. Utilisation selon les revendications 1 à 6, caractérisée en ce que l'on utilise des éther-polyuréthannes présentant un intervalle de fusion de 180 à 240 °C.

8. Utilisation selon les revendications 1 à 7, caractérisée en ce que l'on utilise en tant que composant B) formant des polyuréthannes, des polyéther-polyols de l'oxyde de propylène ou des copolyéthers de l'oxyde d'éthylène et de l'oxyde de propylène à un poids moléculaire de 450 à 6 000.

9. Utilisation selon les revendications 1 à 8, caractérisée en ce que l'on introduit le composant b) du stabilisant, à l'état de poudre ou de granulés, et également les anti-oxydants a) et les composants formant les polyuréthannes par le même endroit d'alimentation ou encore par un ou plusieurs autres endroits d'alimentation, éventuellement par portions, dans une machine à plusieurs vis et, après réaction des composants formant les polyuréthannes, on évacue le polyuréthanne thermoplastique stabilisé de l'extrudeuse et le cas échéant on le met à l'état de granulés.

10. Utilisation selon les revendications 1 à 9, caractérisée en ce que l'on mélange le polyuréthanne thermoplastique fini avec les composants a) et b) du stabilisant à l'aide de mélangeurs internes ou d'extrudeuses.